# EUROPEAN PATENT APPLICATION

(11) **EP 1 469 329 A2**
(43) Date of publication of application: **20.10.2004**
(21) Application number: 04008973.2
(22) Date of filing: 15.04.2004
(51) Int. Cl.: G02B 6/00

(54) **Cable for use in an air blowing installation and apparatus for manufacturing the same**

(30) Priority: 15.04.2003 KR 2003023772; 09.03.2004 KR 2004015825
(71) Applicant: Samsung Electronics Co., Ltd., Suwon-city, Gyeonggi-do (KR)
(72) Inventor: Park, Kyung-Tae, Yeongtong-gu Suwon-si Gyeonggi-do (JP)
(74) Representative: Lang, Johannes, Dipl.-Ing.

(57) **Abstract**

A cable made from an blowing installation includes: at least one transmission medium of electrical or optical signals; and a hollow cylindrical tube containing the transmission medium therein. The tube is formed at a surface thereof with a plurality of recesses.

## Description

This application claims priority to an application entitled "CABLE FOR AIR BLOWING INSTALLATION AND APPARATUS FOR MANUFACTURING THE SAME," filed in the Korean Intellectual Property Office on April 15, 2003 and March 9, 2004 and assigned Serial Nos. 2003-23772 and 2004-15825, the contents of which are hereby incorporated by reference.

### BACKGROUND OF THE INVENTION

### 1. Field of the Invention

The present invention relates to a cable for use in an air blowing installation method, and more particularly to a cable used in an air blowing installation method in which at least one optical fiber is installed.

### 2. Description of the Related Art

As methods for installing a cable in a duct, a method of pulling out or pushing the cable through one end of the duct has been used traditionally. According to this pulling or pushing installation method, it often happens that an excessive stress is applied to the cable. In the case of installing optical cables, especially, such a stress affects optical fibers within the optical cables, thereby causing problems of micro-bending and residual stress on the surface of the optical fibers, and the like. Therefore, an optical cable for use during the pulling installation method, so-called "tension method", requires various tensile members in order to improve a tensile force thereof. As an alternative to the conventional pulling method, a method of installing the optical cable by blowing air into the duct has been proposed. This is called an air blowing installation method. This air blowing installation method is advantageous in that there is no stress to be applied to an interior transmission medium of electrical or optical signals, and in that it is possible to minimize the number of the tensile members, which must be installed inside the optical cable. The optical cable for use in the air blowing installation method must be smaller and lighter in diameter and weight but larger in air resistance force than for use in the conventional pulling method.

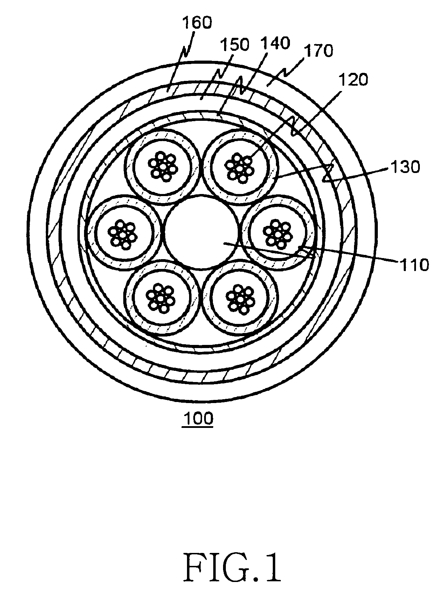

Fig. 1 is a sectional view illustrating the construction of an optical cable for use in a pulling method according to the prior art. The optical cable, designated as reference numeral 100, comprises a center tensile wire 110, multi-core optical fibers 120, a binder 140, a plurality of tubes 130, a primary coating 150, an outer tensile wire 160, and a secondary coating 170.

The center tensile wire 110 is positioned at the center of the optical cable 100 to provide a desired tensile force. As a material of the center tensile wire 110, glass fiber reinforced plastic (FRP) or steel wire can be used. The plural tubes 130 are arranged around the center tensile wire 110, and each of the tubes 130 contains the respective multi-core optical fibers 120. The multi-core optical fibers 120 serve as an optical transmission media. The binder 140 serves to fix the plural tubes 130 together by surrounding them, and the primary coating 150 is produced by an extrusion molding process so as to wrap around the binder 140. The outer tensile wire 160 is wound around the primary coating 150 to provide the desired tensile force. As a material of the outer tensile wire 160, aramid yam or glass yam can be used. The secondary coating 170, disposed at the outermost portion of the optical cable 100, is produced by an extrusion molding process to wrap around the outer tensile wire 160.

As stated above, the optical cable used in the pulling installation method of the prior art comprises several tensile members in order to improve the tensile force of a cable, resulting in increases in diameter and weight thereof. In the case of the optical cable used in the air blowing installation method, as noted earlier, should have a small diameter and weight but a large air resistance force so that it can easily receive propulsion force caused by air blowing. As such, the conventional cable used in the pulling method is not suitable for use in the air blowing installation method.

### SUMMARY OF THE INVENTION

Therefore, the present invention has been made in view of the above problem and provides additional advantages, by providing a cable for air blowing installation, and an apparatus for manufacturing the cable, which can achieve a minimization in diameter and weight but a maximization in air resistance force.

In accordance with one aspect of the present invention, a cable for air blowing installation includes: at least one transmission medium of electrical or optical signals; and a hollow cylindrical tube containing the transmission medium therein, the tube being formed at a surface thereof with a plurality of recesses.

In accordance with another aspect of the present invention, an apparatus for manufacturing a cable for air blowing installation includes: an extruding system for molding a tube of the cable, wherein the extruding system includes: an extruder for extruding the tube in such a way that the tube wraps around at least one transmission medium extending through an interior space thereof; a sprayer formed with a plurality of fine holes or nozzles for sprinkling water supplied thereto over a surface of the tube; and a water tank for cooling the tube.

### BRIEF DESCRIPTION OF THE DRAWINGS

The above features and other advantages of the present invention will be more clearly understood from the following detailed description taken in conjunction with the accompanying drawings, in which:
Fig. 1 is a sectional view illustrating the construction of an optical cable for use in a pulling method according to the prior art;
Fig. 2 is a sectional view illustrating the construction of an optical cable for air blowing installation in accordance with a preferred embodiment of the present invention;
Fig. 3 is an enlarged picture illustrating a sample of a tube shown in Fig. 2;
Fig. 4 is a sectional view explaining a method of measuring a clearance of the tube shown in Fig. 2;
Fig. 5 is a graph illustrating a shrinking rate of the tube shown in Fig. 2 in which the material of the tube is polycarbonate;
Fig. 6 is a view explaining a state wherein the optical cable shown in Fig. 2 is installed in a duct;
Fig. 7 is a graph illustrating a force required to install the optical cable shown in Fig. 2;
Fig. 8 is a graph explaining the variation of optical cable properties according to constituent materials of their tubes; and
Fig. 9 is a view illustrating the construction of an extruding system for molding the tube of the optical cable shown in Fig. 2.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. For the purposes of clarity and simplicity, a detailed description of known functions and configurations incorporated herein will be omitted as it may make the subject matter of the present invention unclear.

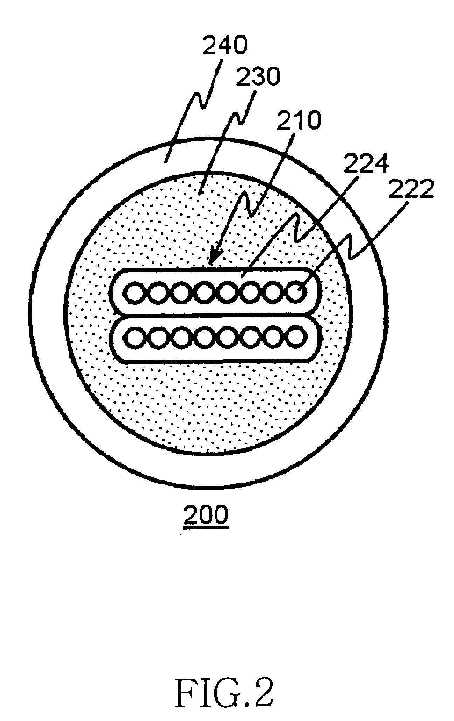

Fig. 2 is a sectional view illustrating the construction of an optical cable made using an air blowing installation in accordance with a preferred embodiment of the present invention. As shown, the optical cable 200 according to the present invention includes optical fiber ribbons 210, a water blocking filler 230, and a tube 240.

Each optical fiber ribbon 210 comprises a plurality of individual optical fibers 222 arranged in a row, and a protective layer 224 applied round the individual optical fibers 222. The optical fibers 222 serve as optical transmission media. The protective layer 224 can be formed by applying a liquid-phase UV curable resin to the plural optical fibers 222 and irradiating ultraviolet rays to the resin to cure it.

The tube 240 has a hollow cylindrical shape, in which the optical fiber ribbons 210 are installed. The tube 240 is formed at the surface thereof with a plurality of recesses having a crater shape. These recesses are distributed over the whole length of the tube 240 and serve to increase an air resistance force on the surface of the optical cable 200, resulting in an improvement in the propulsion force of the optical cable 200 caused by air blowing.

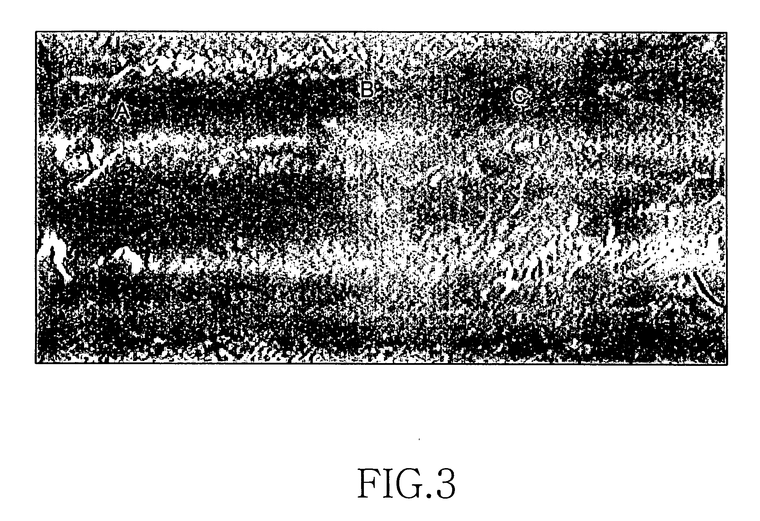

Referring to Fig. 3 illustrating a sample of the tube 240, it can be seen well that surface areas A, B and C, marked with dotted circles, are formed with at least one recess, respectively. The tube 240 is preferably made of amorphous material or amorphous material containing silicone showing a good temperature property, for example, polycarbonate (PC) or polycarbonate containing silicone.

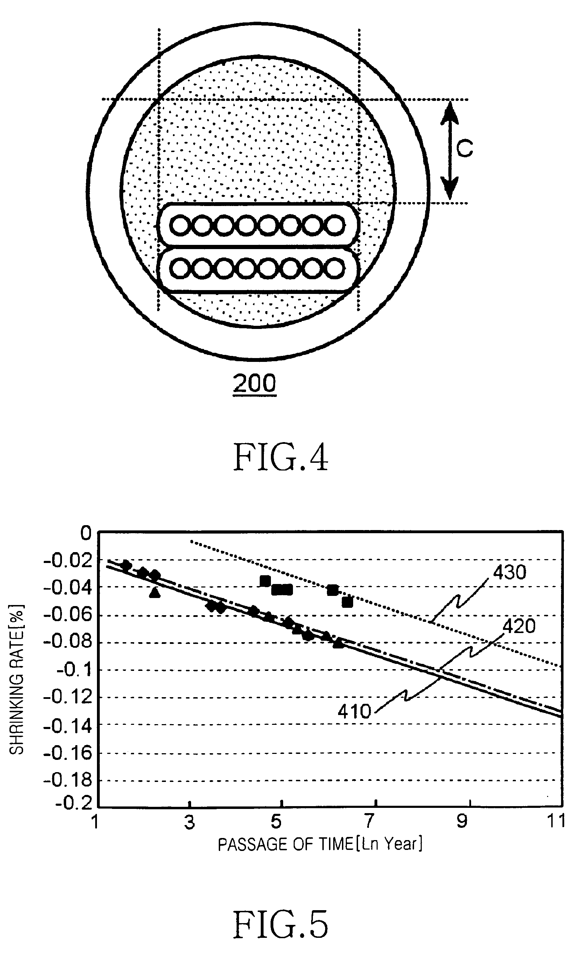

Fig. 4 is a sectional view explaining a method of measuring a clearance (C) of the tube 240 shown in Fig. 2. The clearance (C) of the tube 240 represents a maximum movable distance of the optical fiber ribbons 210 within a radial direction range of the tube 240. As shown in Fig. 4, the clearance (C) of the tube 240 is a maximum movable distance of the optical fiber ribbons 210 in a radial direction of the tube 240 in a state where both lower comer edges of the optical fiber ribbons 210 come into close contact with an inner peripheral wall of the tube 240. Such a clearance (C) of the tube 240 is preferably in the range of 0.5 mm to 1.5 mm. In this case, the outer diameter of the tube 240 is preferably in the range of 1.5 mm to 4.0 mm.

Fig. 5 is a graph illustrating a shrinking rate of the tube 240, in a case wherein a material of the tube 240 shown in Fig. 2 is polycarbonate. Referring to Fig. 5, a first line 410, representing a shrinking rate according to the passage of time in a case wherein an ambient temperature is 70°C, substantially coincides with a second line 420, representing a shrinking rate according to the passage of time in a case wherein the ambient temperature is 50°C. A third line 430, representing a shrinking rate according to the passage of time in a case wherein the ambient temperature is room temperature, is spaced apart from the first and second lines 410 and 420. As can be seen from the first line 410, even if the tube 240 is used, for example, for ten years under environment wherein the ambient temperature is 70°C, a shrinking rate of the tube 240 is no more than 0.12%. It is preferable to use the optical cable 200 at the ambient temperature of -20°C to 50°C where the clearance (C) has a value of 0.8 mm in order to secure the durability thereof.

Referring back to Fig. 2, the interior empty space of the tube 240 is filled with the water blocking filler 230 and the water blocking filler 230 serves to protect the optical fiber ribbons 210 from moisture, previously existing inside the tube 240 or permeated into the tube 240 by absorbing moisture. Such a water blocking filler 230 is needed because the tube 240 is a flow conduit of moisture. The water blocking filler 230 may be selected from among a jelly compound or a water-swellable yarn.

According to the present invention, the optical cable 200 has a diameter reduction effect of about 430% compared to the conventional optical cable 100 as shown in Fig. 1. For example, where a twelve-core optical fiber is installed, the optical cable 200 according to the present invention has an outer diameter of about 2.8 mm, whereas the conventional optical cable 100 has an outer diameter of about 12 mm. In addition, the optical cable 200 of the present invention has a material cost reduction effect of about 480% compared with the conventional optical cable 100.

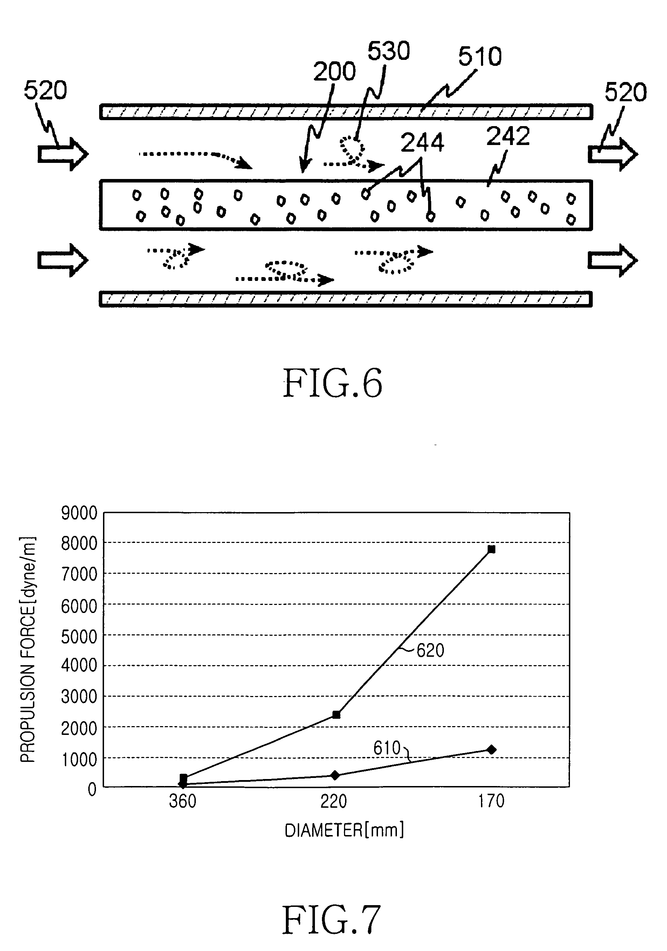

Fig. 6 is a view explaining a state wherein the optical cable 200 shown in Fig. 2 is installed in a duct 510. The duct 510 may be formed to have various cross sectional shapes, and a diameter of the duct 510 is larger than that of the optical cable 200. The air 520 blowing into the duct 510 produces turbulence 530 while frictionally coming into contact with the surface 242 of the optical cable 200. By virtue of such turbulence 530, the optical cable 200 obtains its propulsion force. The recesses 244 formed at the surface 242 of the optical cable 200 increase the frictional force between the air 520 and the optical cable 200, thereby causing the propulsion force of the optical cable 200 to be increased.

Fig. 7 is a graph illustrating a force (namely, propulsion force) required to install the optical cable 200 shown in Fig. 2. Referring to Fig. 7, a first line 610 drawn in a solid line represents the propulsion force for the optical cable 200, and a second line 620 drawn in a dotted line represents the propulsion force of another optical cable, which has the same conditions as the optical cable 200, except the whole surface thereof is smooth without the recesses as stated above. In this case, the propulsion force represents a propulsion force required to propel the optical cable by 5.5 mm. As can be seen from Fig. 7, the propulsion forces for the respective optical cables increase as the duct is smaller in diameter. Where the diameter of the duct is 170 mm, the propulsion force required for the optical cable 200 according to the present invention is only about 1/8 of that of the optical cable according to a comparative example.

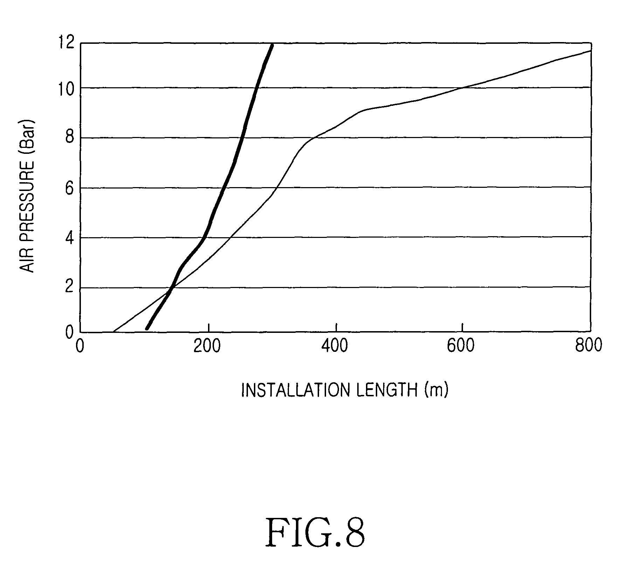

Fig. 8 is a graph illustrating the property variations of optical cables according to constituent materials of their tubes. Referring to Fig. 8, the first line drawn in a thick solid line represents the pressure of blown air according to the installation length of an optical cable in a case where a tube thereof is made of polycarbonate. On the other hand, the second line drawn in a thin solid line represents the pressure of blown air according to the installation length of another optical cable in a case where a tube thereof is made of polycarbonate containing silicone. Both these optical cables have a configuration as shown in Fig. 2 and are designed to be installed in a cylindrical duct having an inner diameter of 5.5 mm. Here, the duct is wound 20 times in a spiral pattern and defines the overall diameter of 15. 9 m. In case of the latter case related to the tube made of polycarbonate containing silicone, silicone contained in polycarbonate acts to improve a slip property of the tube relative to the duct, resulting in a further improvement in the propulsion force of the optical cable by air blowing.

As shown in Fig. 8, under the same conditions, the case wherein the tube is made of polycarbonate containing silicone and the case wherein the tube is made of polycarbonate show a difference in the installation length of the optical cables as much as three times the maximum at the same air pressure. If the tube is made of polycarbonate having a low molecular weight, it suffers from a deterioration in chemical resistance and thermal stability properties. Therefore, when the tube is made of polycarbonate, it is preferable to use polycarbonate having a molecular weight of more than 18000. In case of the tube made of polycarbonate containing silicone, it is preferable to restrict the content of silicone into a range of 0.01 to 0.5 percent by weight based on the weight of polycarbonate. This is because the excessively high content of the silicone may cause the constituent material of the tube to be directly expelled without passing a melting process during the extrusion of the tube. Preferably, such polycarbonate containing silicone has a frictional coefficient of less than 1.

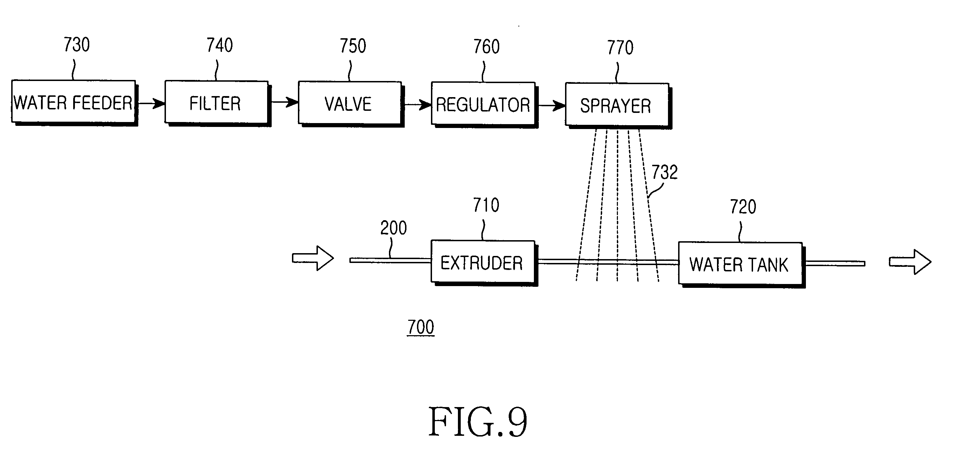

Fig. 9 is a view illustrating an extruding system for molding the tube 240 of the optical cable 200 shown in Fig. 2. The extruding system 700 comprises an extruder 710, a water feeder 730, a filter 740, a valve 750, a regulator 760, a sprayer 770, and a water tank 720.

The extruder 710 extrudes the tube 240 in such a way that the tube 240 wraps around the optical fiber ribbons 210 coated with the water blocking filler 230 and extending through the interior space of the tube 240. In this case, the tube 240 of the optical cable 200, just passed through the extruder 710, has a high temperature, and thus is more or less soft. By passing the optical cable 200 through the water tank 720 filled with cold water, the tube 240 is cured.

The water feeder 730 supplies water 732 at a pressure of about 5 bar. The water 732, supplied from the water feeder 730, is processed using the filter 740 in order to remove any impurities contained therein. The valve 750 serves to selectively shut off the passage of the filtered water 732. The regulator 760 is interposed between the valve 750 and sprayer 770 and is used to adjust the pressure of the water 732 to be supplied into the sprayer 770. The sprayer 770 is formed with a plurality of fine holes or nozzles having a diameter sufficient to spout the water 732 in a mist form. The diameter of the nozzles formed at the sprayer 770 is preferably less than 50 micrometers. The water 732, of mist form, from the sprayer 770 is sprinkled over the outer circumferential surface of the optical cable 200, more particularly, the surface 242 of the soft tube 240 in a state where it will enter the water tank 720, thereby forming the recesses 244 having a crater shape on the surface 242 of the tube 240.

Although the above-described embodiment takes an example wherein the optical fiber ribbons are installed inside the tube of the optical cable, optional other optical or electrical signal transmission media may be installed inside the tube. For example, inside the tube a copper wire, an optical fiber consisting of multiple cores spaced apart from one another, a plurality of steel wires and a combination of at least one optical fiber, and the like may be installed.

As apparent from the above description, a cable for air blowing installation according to the present invention is formed at the surface thereof with a plurality of recesses, resulting in a maximization of a frictional force between the cable and the air inside an installation duct. Further, according to the present invention, since a tube of the cable is made of polycarbonate containing silicone, it is possible to enhance the slip property of the cable relative to the duct and to eliminate the need of tensile members by virtue of the low shrinking property of polycarbonate, thus resulting in a considerable reduction in an outer diameter of the cable. This is advantageous to increase an installation length and speed of the cable. Furthermore, according to the present invention, it is possible to minimize a diameter and weight of the cable by minimizing the number of components constituting the cable.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A cable for use in an air blowing installation comprising:
at least one transmission medium of electrical or optical signals; and
a hollow cylindrical tube containing the transmission medium therein, the tube being formed at a surface thereof with a plurality of recesses.

2. The cable as set forth in claim 1, wherein the transmission medium comprises an optical fiber ribbon having a plurality of individual optical fibers and a protective layer surrounding the individual optical fibers.

3. The cable as set forth in claim 1, wherein the tube is made of amorphous material.

4. The cable as set forth in claim 1, wherein the tube is made of amorphous material containing silicone.

5. The cable as set forth in claim 1, wherein the tube is made of polycarbonate.

6. The cable as set forth in claim 5, wherein the polycarbonate has a molecular weight of more than 18000.

7. The cable as set forth in claim 1, wherein the tube is made of polycarbonate containing silicone.

8. The cable as set forth in claim 7, wherein the content of the silicone is in a range of 0.01 to 0.5 percent by weight based on the weight of the polycarbonate.

9. The cable as set forth in claim 1, wherein polycarbonate containing silicone has a frictional coefficient of less than 1.

10. The cable as set forth in claim 1, further comprising a water blocking filler provided in an interior empty space of the tube.

11. The cable as set forth in claim 10, wherein the water blocking filler includes a jelly compound.

12. The cable as set forth in claim 1, wherein the tube has a clearance in a range of 0.5 mm to 1.5 mm.

13. The cable as set forth in claim 1, wherein an outer diameter in a range of 1.5 mm to 4.0 mm.

14. The cable as set forth in claim 2, wherein the protective layer is formed by applying a liquid-phase UV curable resin to the plural optical fibers and irradiating ultraviolet rays to the resin.

15. The cable as set forth in claim 1, wherein the plurality of recesses has a crater shape.

16. An apparatus for manufacturing a cable used in an air blowing installation comprising:
an extruding device for molding a tube of the cable,
wherein the extruding device includes:
an extruder for extruding the tube in such a way that the tube wraps around at least one transmission medium extending through an interior space thereof;
a sprayer formed with a plurality of fine holes or nozzles for sprinkling water supplied thereto over a surface of the tube; and
a water tank for cooling the tube.

17. The apparatus as set forth in claim 16, wherein the nozzles formed at the sprayer have a diameter of less than 50 micrometers.

18. The apparatus as set forth in claim 16, further comprising:
a water feeder for the supply of the water;
a filter for removing impurities contained in the water;
a valve for selectively shutting off the passage of the filtered water so as to supply the filtered water to the sprayer; and
a regulator interposed between the valve and sprayer for adjusting the pressure of the water to be supplied into the sprayer.
